# EUROPEAN PATENT SPECIFICATION

(11) **EP 3 948 793 B1**
(45) Date of publication and mention of the grant of the patent: **26.10.2022**
(21) Application number: 20711956.1
(22) Date of filing: 23.03.2020
(51) Int. Cl.: G06T 15/50, G06T 19/00, G06T 19/20

(54) **DETERMINING LIGHTING DESIGN PREFERENCES IN AN AUGMENTED AND/OR VIRTUAL REALITY ENVIRONMENT**
BESTIMMUNG VON BELEUCHTUNGSDESIGNPRÄFERENZEN IN EINER UMGEBUNG DER ERWEITERTEN UND/ODER VIRTUELLEN REALITÄT
DÉTERMINATION DES PRÉFÉRENCES DE CONCEPTION D'ÉCLAIRAGE DANS UN ENVIRONNEMENT DE RÉALITÉ AUGMENTÉE ET/OU VIRTUELLE

(30) Priority: 03.04.2019 EP 19166950
(43) Date of publication of application: 09.02.2022
(73) Proprietor: Signify Holding B.V., 5656 AE Eindhoven (NL)
(72) Inventor: PIJLMAN, Fetze, 5656 AE Eindhoven (NL)
(74) Representative: Verweij, Petronella Daniëlle
(86) International application number: PCT/EP2020/057958
(87) International publication number: WO 2020/200876

(56) References cited:
- US-A1- 2003 097 309
- WORAWAN NATEPHRA ET AL: "Integrating Building Information Modeling and Game Engine for Indoor Lighting Visualization", PROCEEDINGS OF THE 16TH INTERNATIONAL CONFERENCE ON CONSTRUCTION APPLICATIONS OF VIRTUAL REALITY, December 2016 (2016-12), pages 11-13, XP055627431, cited in the application
- HEYDARIAN ARSALAN ET AL: "Towards user centered building design: Identifying end-user lighting preferences via immersive virtual environments", AUTOMATION IN CONSTRUCTION, ELSEVIER, AMSTERDAM, NL, vol. 81, 31 May 2017 (2017-05-31), pages 56-66, XP085112331, ISSN: 0926-5805, DOI: 10.1016/J.AUTCON.2017.05.003
- M O WONG ET AL: "An experience-based interactive lighting design approach using BIM and VR: a case study", IOP CONFERENCE SERIES: EARTH AND ENVIRONMENTAL SCIENCE, vol. 238, 4 March 2019 (2019-03-04), page 012006, XP055628731, DOI: 10.1088/1755-1315/238/1/012006
- ELEONORA PANTANO ET AL: "Modeling innovative points of sales through virtual and immersive technologies", JOURNAL OF RETAILING AND CONSUMER SERVICES, vol. 19, no. 3, 4 March 2019 (2019-03-04), pages 279-286, XP028420078, ISSN: 0969-6989, DOI: 10.1016/J.JRETCONSER.2012.02.002 [retrieved on 2012-03-05]

## Description

### FIELD OF THE INVENTION

The invention relates to a system and method for rendering a plurality of different lighting designs in a virtual and/or augmented reality environment, each of said plurality of different lighting designs comprising a lighting condition and/or an appearance of a lighting device, and determining a user's preference with respect to said plurality of different lighting designs.

The invention also relates to a computer program product enabling a computer system to perform such a method.

### BACKGROUND OF THE INVENTION

Lighting design is an important aspect for creating a good lighting atmosphere. Besides the lamp and fixture type, the actual location and orientation of the luminaires in combination with the interior design determine the overall atmosphere.

For larger lighting projects, a lighting designer helps the customer in choosing the right design. A standard way of working is that the lighting designer presents schematics plans and sometimes a graphical illustration of the proposed solution. A problem with this way of working is that the customer cannot really experience how it is like to have this particular solution.

One direction that has become of interest is the use of virtual reality (VR). With virtual reality, one can improve the experience of environments substantially. A new way of working is that the lighting designer converts its schematic plans for VR environments, thereby aiding the customer in its decision making.

For example, the paper "Integrating Building Information Modeling and Game Engine for Indoor Lighting Visualization" by Worawan Natephra et al., Proceedings of the 16th International Conference on Construction Applications of Virtual Reality, 11-13 December 2016, Hong Kong, China, discloses a virtual reality system that simulates daylight and artificial lights of a design building and visualizes a realistic lighting environment using head-mounted displays. A user is able to control the movement of the user's avatar when he is walking in the design space. The system also allows the user to readjust design parameters if the light output is not satisfactory, e.g. by customizing lighting fixtures, light bulb types, lighting intensity and color temperature. The system further allows the user to adjust the time to allow him to observe the dynamic of sunlight.

However, although the system disclosed in this paper is beneficial for lighting designers, it is not well suited for use by customers, because customers would need to make many design decisions which would normally be made by a light designer.

### SUMMARY OF THE INVENTION

It is a first object of the invention to provide a system, which can be used by a customer of a light designer to determine a lighting design that meets its requirements using an augmented and/or virtual reality environment.

It is a second object of the invention to provide a method, which enables a customer of a light designer to determine a lighting design that meets its requirements using an augmented and/or virtual reality environment.

In a first aspect of the invention, a system for rendering a plurality of different lighting designs in a virtual and/or augmented reality environment, each of said plurality of different lighting designs comprising a lighting condition and/or an appearance of a lighting device, and determining a user's preference with respect to said plurality of different lighting designs comprises at least one input interface, at least one output interface, and at least one processor.

The at least one processor is configured to use said at least one output interface to render a plurality of different lighting designs in said virtual and/or augmented reality environment, said virtual and/or augmented reality environment comprising at least a first spatial area demonstrating a first one of said plurality of lighting designs and a second spatial area demonstrating a second one of said plurality of lighting designs, use said at least one input interface to determine a path taken by said user in said virtual and/or augment reality environment, and determine whether said user prefers said first lighting design over said second lighting design or said second lighting design over said first lighting design based on said determined path.

Said first lighting design and said second lighting design may comprise different light levels, different light colors, different lamp appearances, different luminaire appearances, different lamp types, different luminaire types, different luminaire locations and/or different luminaire orientations, for example.

By rendering different lighting designs in different spatial areas of the augmented and/or virtual reality environment and determining a preference of a customer of a lighting designer for one lighting design over another lighting design based on a path taken by this customer in the augmented reality and/or virtual reality environment, e.g. which rooms the user visits, a lighting design can be determined that meets the customer's requirement without requiring the customer to make many decisions. An environment in which augmented reality and virtual reality are combined is also referred to as a mixed reality environment.

Said at least one processor may be configured to use said at least one output interface to render video pixels corresponding to said plurality of different lighting designs superimposed on a user's view of the real world and determine said path based on a plurality of physical locations of said user, said plurality of physical locations being obtained using said at least one input interface. An augmented reality environment can be used to relatively easily demonstrate what a lighting design would look like under current conditions. In an augmented reality environment, the user's physical locations can be used to determine the user's path.

Said at least one processor may be configured to generate a virtual reality environment comprising said first spatial area and said second spatial area, use said at least one output interface to display a first image representing a first view of said virtual reality environment to said user, said first image comprising a first plurality of video pixels, use said at least one input interface to receive input from said user, determine a second view of said virtual reality environment based on said user input, said second view being from a different position in said virtual reality environment than said first view, use said at least one output interface to display a second image representing said second view of said virtual reality environment to said user, said second image comprising a second plurality of video pixels, and determine said path taken by said user based on said user input. In a virtual reality environment that is not a mixed reality environment, the user typically provides navigation commands to navigate through the virtual reality environment. Such a virtual reality environment makes it easier to simulate activities, daylight characteristics and interior designs not currently present in the environment for which the lighting is meant, e.g. a building that is yet to be built.

Said at least one processor may be configured to generate said virtual reality environment in dependence on a specified activity type and/or a specified activity level and/or a specified interior design and/or a specified daylight characteristic. This allows the user to simulate an environment that is similar to an environment for which the lighting is meant without requiring this environment to be available. Said at least one processor may be configured to determine said specified daylight characteristic based on a specified season of year and/or time of day and/or weather condition, for example.

Said at least one processor may be configured to include either said first lighting design or said second lighting design in a lighting plan in dependence on said determined user preference and use said at least one output interface to output said lighting plan. A lighting plan typically indicates the locations of the lighting devices, and other properties of the lighting design, on a map. The lighting plan can be provided to the supplier and/or to the installer of the lighting devices, for example.

Said at least one processor may be configured to select a third lighting design and a fourth lighting design based on said determined user preference, said third lighting design and said fourth lighting design not having been demonstrated in said virtual and/or augmented reality environment, use said at least one output interface to render a further plurality of different lighting designs in a further virtual and/or augmented reality environment, said further virtual and/or augmented reality environment comprising at least a first further spatial area demonstrating said third lighting design and a second further spatial area demonstrating said fourth lighting design, use said at least one input interface to determine a further path taken by said user in said further virtual and/or augment reality environment, and determine whether said user prefers said third lighting design over said fourth lighting design or said fourth lighting design over said third lighting design based on said determined further path. This allows the system to refine its knowledge of the user's preferences step by step. The third and fourth lighting designs are typically dissimilar to the non-preferred lighting design and may be variations on the preferred lighting design.

Said at least one processor may be configured to determine that said user prefers said first lighting design over said second lighting design upon determining that said user entered said first spatial area and did not enter said second spatial area and determine that said user prefers said second lighting design over said first lighting design upon determining that said user entered said second spatial area and did not enter said first spatial area. If a user is able to get some sense of the lighting in a spatial area, e.g. through glass or through an open door, his decision to enter or not to enter this spatial area is then typically a good indication of whether he likes this lighting design.

Said path may indicate how long said user spent in said first spatial area and said second spatial area and said at least one processor may be configured to determine whether said user prefers said first lighting design over said second lighting design or said second lighting design over said first lighting design based on how long said user spent in said first spatial area and said second spatial area. The time spent by a user in a spatial area is typically a good indication of whether he likes this lighting design, especially when the user walks around in the spatial area.

Said at least one processor may be configured to use said at least one input interface to receive further input from said user and adapt said first lighting design and/or said second lighting design based on said further input. When the user sees a lighting design he likes, but thinks it could still be improved, it is beneficial to allow him to adapt this lighting design. Preferably, the lighting design that is determined to be preferred by the user includes these adaptations.

Said path may indicate whether said user adapted said first lighting design and/or said second lighting design and said at least one processor may be configured to determine whether said user prefers said first lighting design over said second lighting design or said second lighting design over said first lighting design based on whether said user adapted said first lighting design and/or said second lighting design. If a user adapts a lighting design, this is typically a good indication that he likes this lighting design.

In a second aspect of the invention, a method of rendering a plurality of different lighting designs in a virtual and/or augmented reality environment, each of said plurality of different lighting designs comprising a lighting condition and/or an appearance of a lighting device, and determining a user's preference with respect to said plurality of different lighting designs comprises rendering a plurality of different lighting designs in said virtual and/or augmented reality environment, said virtual and/or augmented reality environment comprising at least a first spatial area demonstrating a first one of said plurality of lighting designs and a second spatial area demonstrating a second one of said plurality of lighting designs, determining a path taken by said user in said virtual and/or augment reality environment, and determining whether said user prefers said first lighting design over said second lighting design or said second lighting design over said first lighting design based on said determined path. Said method may be performed by software running on a programmable device. This software may be provided as a computer program product.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations for rendering a plurality of different lighting designs in a virtual and/or augmented reality environment, each of said plurality of different lighting designs comprising a lighting condition and/or an appearance of a lighting device, and determining a user's preference with respect to said plurality of different lighting designs.

The executable operations comprise rendering a plurality of different lighting designs in said virtual and/or augmented reality environment, said virtual and/or augmented reality environment comprising at least a first spatial area demonstrating a first one of said plurality of lighting designs and a second spatial area demonstrating a second one of said plurality of lighting designs, determining a path taken by said user in said virtual and/or augment reality environment, and determining whether said user prefers said first lighting design over said second lighting design or said second lighting design over said first lighting design based on said determined path.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of a first embodiment of the system;
Fig. 2 is a block diagram of a second embodiment of the system;
Fig. 3 depicts an example of a map of an augmented and/or virtual reality environment;
Fig. 4 shows an example of a spatial area in a physical environment;
Fig. 5 shows an example of a lighting design added to the spatial area of Fig. 4;
Fig. 6 shows an example of a user entering the spatial area of Fig. 5;
Fig. 7 shows an example of an augmented and/or virtual reality environment being displayed on a mobile phone;
Fig. 8 depicts an example of a path taken by a user on the map of Fig. 3;
Fig. 9 is a flow diagram of a first embodiment of the method;
Fig. 10 is a flow diagram of a second embodiment of the method;
Fig. 11 is a flow diagram of a third embodiment of the method;
Fig. 12 is a flow diagram of a fourth embodiment of the method; and
Fig. 13 is a block diagram of an exemplary data processing system for performing the method of the invention.

Corresponding elements in the drawings are denoted by the same reference numeral.

### DETAILED DESCRIPTION OF THE EMBODIMENTS

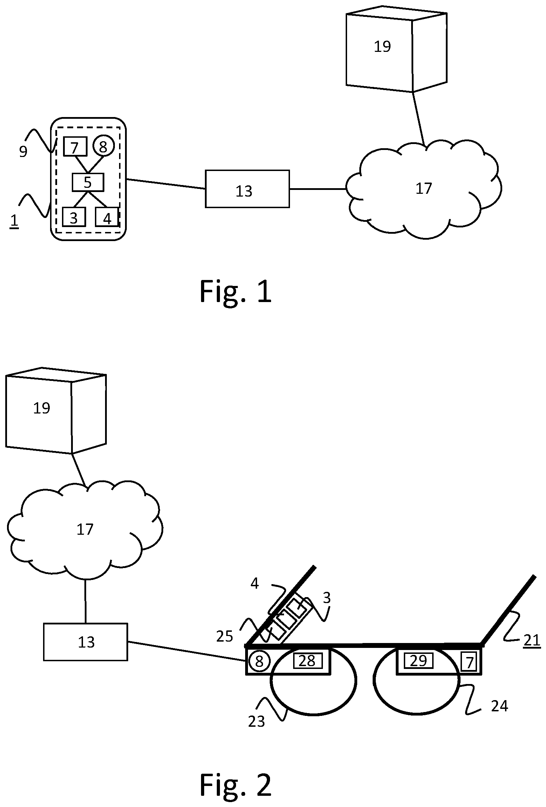

**Fig. 1** shows a first embodiment of the system for rendering a plurality of different lighting designs in a virtual and/or augmented reality environment and determining a user's preference with respect to the plurality of different lighting designs. Each of the plurality of different lighting designs comprises a lighting condition and/or an appearance of a lighting device. In the embodiment of **Fig. 1**, the system is a mobile phone **1**. The mobile phone **1** is connected to a wireless LAN access point **13**. The wireless LAN access point **13** is connected to the Internet (backbone) **17**. A server **19** is also connected to the Internet (backbone) **17**.

The mobile phone **1** comprises a receiver **3,** a transmitter **4**, a processor **5**, memory **7**, a camera **8** and a display **9**. The processor **5** is configured to use the display **9** to render a plurality of different lighting designs in a virtual reality environment. The virtual reality environment comprises at least a first spatial area demonstrating a first one of the plurality of lighting designs and a second spatial area demonstrating a second one of the plurality of lighting designs.

The first lighting design and the second lighting design may comprise different light levels, different light colors, different lamp appearances, different luminaire appearances, different lamp types, different luminaire types, different luminaire locations and/or different luminaire orientations, for example. The first lighting design and the second lighting design are obtained from the Internet server **19** using receiver **3** and transmitter **4** and may be preselected by a designer.

The processor **5** is further configured to determine a path taken by the user in the virtual reality environment and determine whether the user prefers the first lighting design over the second lighting design or the second lighting design over the first lighting design based on the determined path.

In this way, a customer of a lighting designer, or one of its employees if the customer is a company, can move through a virtual and/or augmented reality environment in which various lighting designs are rendered. Which lighting designs are preferred by the customer and may be included in a light plan depends on the path along which the customer has moved. Closing of doors may be interpreted as a dissatisfier and moving into a room may be interpreted as a satisfier. The interior design may be made to match the design of the customer and the use of the space that is rendered in the environment (e.g. people walking around / working) may be made to match the intended use of the customer. The customer may be able to control the light settings, e.g. light level and color, and this input may be used to generate further lighting designs.

The preference for a lighting design may be measured through a combination of the time the user spends in a particular room (more time indicates a preference), how fast a user walks through the room before entering the next one (fast is interpreted as negative), whether or not the user plays (virtually) with the lighting controls (engaging with the system is positive), and the settings used on the lighting controls, for example.

In the embodiment of **Fig. 1**, the mobile phone **1** offers two modes:
a) virtual reality
b) mixed reality (i.e. a combination of virtual reality and augmented reality)

To provide mode a), the processor **5** is configured to generate a virtual reality environment comprising the first spatial area and the second spatial area, use the display **9** to display a first image representing a first view of the virtual reality environment to the user, use the (touch screen) display **9** to receive input from the user, and use the display **9** to display a second image representing the second view of the virtual reality environment to the user when the real or virtual position of the user in the virtual reality environment changes. The second view is from a different position in the virtual reality environment than the first view. The first and second images comprise a first plurality and a second plurality of video pixels, respectively. The processor **5** is configured determine the path taken by the user based on the user input.

In the embodiment of **Fig. 1**, in mode a), the processor **5** is configured to generate the virtual reality environment in dependence on a specified activity type and/or a specified activity level and/or a specified interior design and/or a specified daylight characteristic. For example, the user may be able to change the room properties and activities to experience how the lighting appears for the different activities that may take place. In normal life, some rooms may be multi-functional, e.g. a person can have dinner at a living room at home, but this person can also have a party in this room.

The user may further be allowed to change the furniture in the room and/or the colors of the walls. The specified daylight characteristic may be determined based on a specified season of year and/or time of day and/or weather condition. Different seasons bring in different colors of daylight. Moreover, the daylight is sometimes pretty diffused on a cloudy day in which case the user may prefer to have some color inside the house.

To provide mode b), the processor **5** is configured to render video pixels corresponding to the plurality of different lighting designs superimposed on a user's view of the real world and determine the path based on a plurality of physical locations of the user. The physical locations are obtained using input from one or more sensors, e.g. a GPS or other location sensor, an accelerometer (not shown), and/or camera **8**. The physical locations may be determined using RF beacons, for example. In mode b), the images captured by the camera **8** are displayed on the display **9** in real-time and one or more lighting designs are superimposed on these images in dependence on the position of the user.

In the embodiment of **Fig. 1**, the mobile phone **1** offers two modes. In an alternative embodiment, the mobile phone **1** only offers one of these two modes.

In the embodiment of the mobile phone **1** shown in **Fig. 1**, the mobile phone **1** comprises one processor **5**. In an alternative embodiment, the mobile phone **1** comprises multiple processors. The processor **5** of the mobile phone **1** may be a general-purpose processor, e.g. from ARM or Qualcomm or an application-specific processor. The processor **5** of the mobile phone **1** may run an Android or iOS operating system for example. The display **9** may comprise an LCD or OLED display panel, for example. The display **9** may be a touch screen, for example. The processor **5** may use this touch screen to provide a user interface, for example. The memory **7** may comprise one or more memory units. The memory **7** may comprise solid state memory, for example.

The receiver **3** and the transmitter **4** may use one or more wireless communication technologies such as Wi-Fi (IEEE 802.11) to communicate with the wireless LAN access point **12**, for example. In an alternative embodiment, multiple receivers and/or multiple transmitters are used instead of a single receiver and a single transmitter. In the embodiment shown in **Fig. 1**, a separate receiver and a separate transmitter are used. In an alternative embodiment, the receiver **3** and the transmitter **4** are combined into a transceiver. The camera **8** may comprise a CMOS or CCD sensor, for example. The mobile phone 1 may comprise other components typical for a mobile phone such as a battery and a power connector. The invention may be implemented using a computer program running on one or more processors.

In the embodiment of **Fig. 1**, the system is a mobile phone. In an alternative embodiment, the system of the invention is a different device. In the embodiment of **Fig. 1**, the system of the invention comprises a single device. In an alternative embodiment, the system of the invention comprises a plurality of devices.

**Fig. 2** shows a second embodiment of the system: mixed reality glasses **21**. The mixed reality glasses **21** comprise two glasses **23** and **24**, a processor **25** and two projectors **28** and **29**. The projector **28** projects images on the glass **23**. The projector **29** projects images on the glass **24**. The mixed reality glasses **21** further comprise a receiver **3**, transmitter **4**, memory **7** and camera **8** like that of the mobile phone of **Fig. 1**.

The processor **25** is configured to use the projectors **28** and **29** to render a plurality of different lighting designs in a mixed reality environment, i.e. a combination of a virtual and augmented reality environment. The mixed reality environment comprises at least a first spatial area demonstrating a first one of the plurality of lighting designs and a second spatial area demonstrating a second one of the plurality of lighting designs. The spatial areas may be real rooms of the building that the user is in.

The processor **25** is configured to determine a path taken by the user in the mixed reality environment and determine whether the user prefers the first lighting design over the second lighting design or the second lighting design over the first lighting design based on the determined path. The processor **25** is configured to provide mode b), which has been described in relation to **Fig. 1**. The physical locations of the user may be determined using camera **8** (e.g. by employing object recognition), using receiver **3** (e.g. based on received RF beacons) and/or by using one or more other sensors (e.g. an accelerometer).

In the embodiment of the mixed reality glasses **21** shown in **Fig. 2**, the mixed reality glasses **21** comprises one processor **25**. In an alternative embodiment, the mixed reality glasses **21** comprises multiple processors. The processor **25** of the mixed reality glasses **21** may be a general-purpose processor or an application-specific processor. The processor **25** of the mixed reality glasses **21** may run a Unix-based operating system for example. The memory **27** may comprise one or more memory units. The memory **27** may comprise solid-state memory, for example. The camera **8** may comprise a CMOS or CCD sensor, for example. The projectors **28** and **29** may be (e.g. DLP) pico projectors for near eye display, for example.

The receiver **3** and the transmitter **4** may use one or more wireless communication technologies to communicate with the wireless LAN access point **13** or with a mobile communication network, for example. In an alternative embodiment, multiple receivers and/or multiple transmitters are used instead of a single receiver and a single transmitter. In the embodiment shown in **Fig. 2**, a separate receiver and a separate transmitter are used. In an alternative embodiment, the receiver **3** and the transmitter **4** are combined into a transceiver. The mixed reality glasses **21** may comprise other components typical for a mobile device such as a battery. The invention may be implemented using a computer program running on one or more processors.

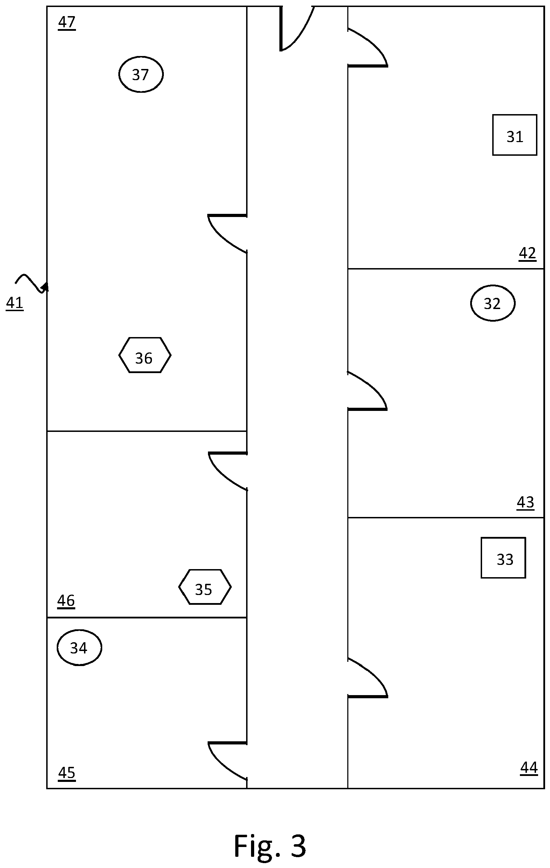

**Fig. 3** depicts an example of a map of an augmented and/or virtual reality environment. The map shows a floor **41** that has six rooms: rooms **42-47**. Each room has a different lighting design. These lighting designs are achieved with one or two lighting devices per room in the example of **Fig. 3**. A first lighting design is created by lighting device **31** in room **42.** A second lighting design is created by lighting device **32** in room **43.** A third lighting design is created by lighting device **33** in room **44.**

A fourth lighting design is created by lighting device **34** in room **45.** A fifth lighting design is created by lighting device **35** in room **46.** A sixth lighting design is created by lighting devices **36** and **37** in room **41.** The lighting devices **31** and **33** use the same type of luminaire, but different light settings. The lighting devices **32**, **34** and **37** use the same type of luminaire, but different light settings. The lighting devices **35** and **36** use the same type of luminaire, but different light settings.

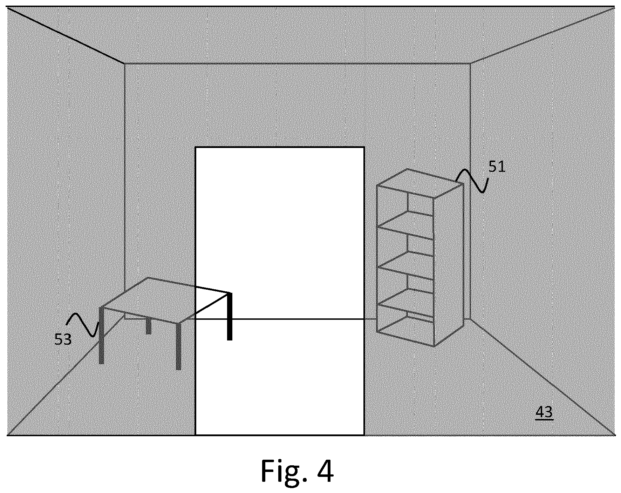

In the example of **Fig. 4**, it is assumed that **Fig. 3** depicts an example of a map of an augmented reality environment, i.e. that rooms **42-47** are real rooms. **Fig. 4** shows a view on the real room **43.** The real room **43** comprises a real table **53** and a real cabinet **51.** The wall between the real room **43** and the hall is made from semi-transparent glass.

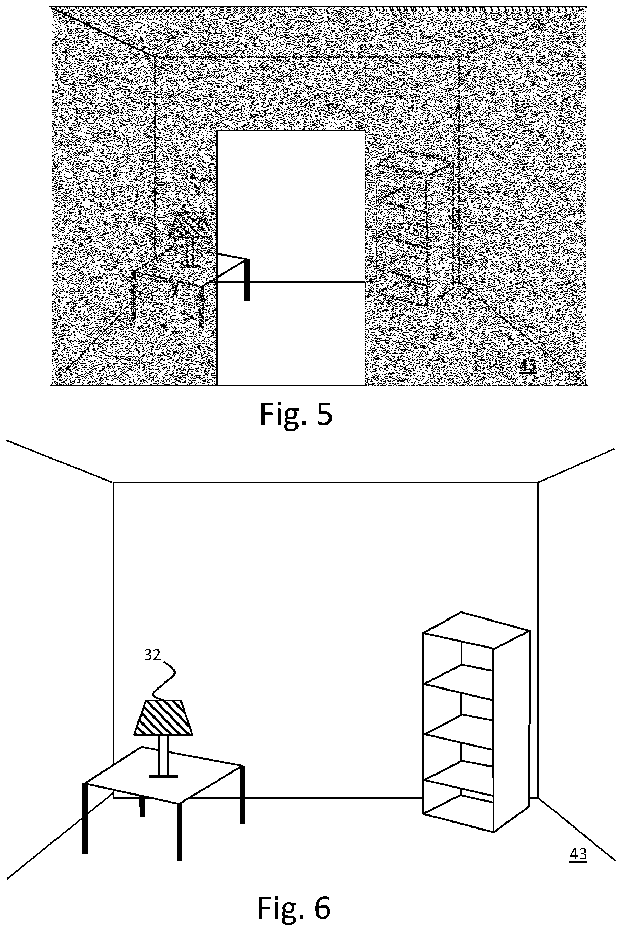

**Fig. 5** depicts a lighting design being superimposed on a view of the real world, i.e. the view of **Fig. 4****.** This lighting design is created by virtual lighting device **32.** **Fig. 6** shows a view of the augmented reality environment after the user has entered real room **43.**

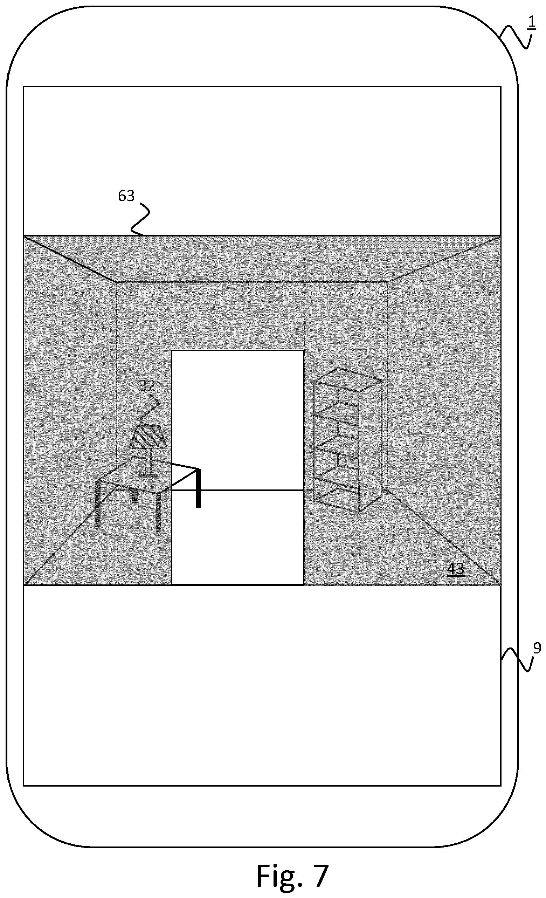

**Fig. 7** shows a view **63** on room **43** of **Fig. 3** that is displayed on a display **9** of mobile device **1** of **Fig. 1****.** The room **43** may be the real room **43** of **Fig. 4** or may be a virtual room that looks similar to the real room **43** of **Fig. 4****.**

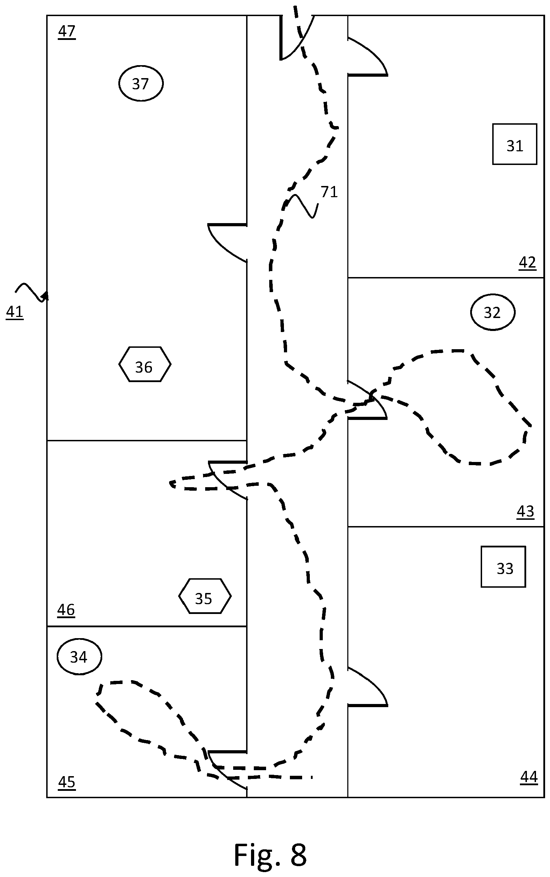

After the user has walked through the virtual and/or augmented reality environment of **Fig. 3**, the path taken by the user is determined. **Fig. 8** depicts a path **71** taken by the user, which has been overlaid on the map of **Fig. 3**. After the user started moving through the virtual and/ augmented reality environment at a position near the door to the floor **41**, he did not enter rooms **42** or **47**, because the lighting designs that he could see through the glass did not appeal to him.

The user then entered the room **43** and walked around in this room, because the lighting design in this room appealed to him. The user then entered room **46**, because the lighting design in this room seemed appealing at first, but the user did not spend a lot of time in this room, as the lighting design did not meet his expectations. The user did not enter room **44**, because the lighting design that he could see through the glass did not appeal to him. The user then entered the room **45** and walked around in this room, because the lighting design in this room appealed to him.

The environment of the customer can be translated into a computer format such as a revit file. The intended use of space can also be described in this format. The intended use of space together with its geometrical factors are typically sufficient for generating some lighting designs. As the user walks through the environment, his path is monitored. If the user enters rooms in which the light levels are high, then the user/customer may be determined to have a preference for a lighting design with a higher light level.

If the user visits rooms with substantially different lighting designs, then a wide range of different lighting designs, possibly combinations of multiple lighting designs, may be included in a light plan or in a next virtual and/or augmented reality environment, as apparently the user/customer is not sure what he wants. Opening of a glass door (through which the user can see the opposite room) and moving into the room may be considered a sign of interest. Looking into the room and not opening the door may be considered a dissatisfier.

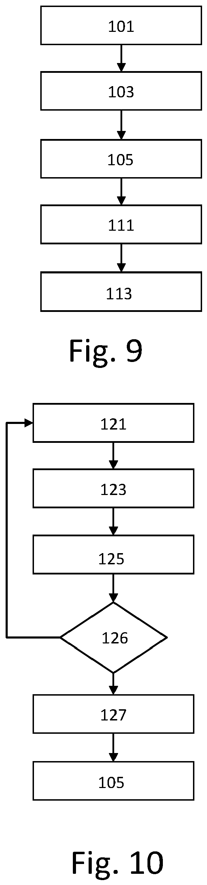

A first embodiment of the method of rendering a plurality of different lighting designs in a virtual and/or augmented reality environment and determining a user's preference with respect to the plurality of different lighting designs is shown in **Fig. 9**. Each of the plurality of different lighting designs comprises a lighting condition and/or an appearance of a lighting device.

A step **101** comprises rendering a plurality of different lighting designs in the virtual and/or augmented reality environment. The virtual and/or augmented reality environment comprises at least a first spatial area demonstrating a first one of the plurality of lighting designs and a second spatial area demonstrating a second one of the plurality of lighting designs. The first lighting design and the second lighting design may comprise different light levels, different light colors, different lamp appearances, different luminaire appearances, different lamp types, different luminaire types, different luminaire locations and/or different luminaire orientations, for example.

A step **103** comprises determining a path taken by the user in the virtual and/or augment reality environment. A step **105** comprises determining whether the user prefers the first lighting design over the second lighting design or the second lighting design over the first lighting design based on the determined path.

In the embodiment of **Fig. 9****,** step **105** comprises determining that the user prefers the first lighting design over the second lighting design upon determining that the user entered the first spatial area and did not enter the second spatial area and determining that the user prefers the second lighting design over the first lighting design upon determining that the user entered the second spatial area and did not enter the first spatial area.

In the embodiment of **Fig. 9**, the path indicates how long the user spent in the first spatial area and the second spatial area and step **105** further comprises determining whether the user prefers the first lighting design over the second lighting design or the second lighting design over the first lighting design based on how long the user spent in the first spatial area and the second spatial area.

In an alternative embodiment, step **105** comprises only one of taking into whether the user entered a spatial area or not and taking into account how long the user spent in a spatial area and/or comprises taking into account alternative preference determination criteria. In the embodiment of **Fig. 9**, a step **111** comprises including either the first lighting design or the second lighting design in a lighting plan in dependence on the determined user preference. A step **113** comprises outputting the lighting plan.

A second embodiment of the method of rendering a plurality of different lighting designs in a virtual and/or augmented reality environment and determining a user's preference with respect to the plurality of different lighting designs is shown in **Fig. 10**.

A step **121** comprises determining a current view, e.g. initial view, on the virtual and/or augmented reality environment based on the real or virtual position of the user in the virtual and/or augmented reality environment. The virtual and/or augmented reality environment comprises the first spatial area and the second spatial area. These spatial areas may be real rooms or virtual rooms, for example.

A step **123** comprises rendering an (2D or 3D) image corresponding to the current view. The image comprises a plurality of pixels. The image may represent the virtual world, e.g. virtual rooms, or may be augmented information superimposed on a user's view of the real world, e.g. including real rooms. Depending on the position of the user in the virtual and/or augmented reality environment, one or more lighting designs may be visible in the rendered image.

A step **125** comprises receiving input. This input may be user input or sensor input, for example. The user may be able to provide the user input to indicate a direction in which he wants to walk through the virtual reality environment, for example. The user may further be able to indicate a speed at which he wants to walk. The sensor input may be used to determine a physical location of the user, e.g. to determine which real room the user has entered. The sensor input may be received from a GPS or other location sensor, from an accelerometer, and/or from a camera, for example.

A step **126** comprises determining what kind of input is provided. If the user indicates a direction in which he wants to move or if he moves to another spatial area in the augmented reality environment, then step **121** is repeated and a new view is determined in step **121** based on this input. If the user indicates in his user input that he wishes to exit the virtual and/or augmented reality environment and/or if the user moves to a spatial area that is not part of the augmented reality environment, then step **127** is performed after step **126**.

Step **127** comprises determining the path taken by the user based on the input received in step **125**. Step **105** comprises determining whether the user prefers the first lighting design over the second lighting design or the second lighting design over the first lighting design based on the determined path.

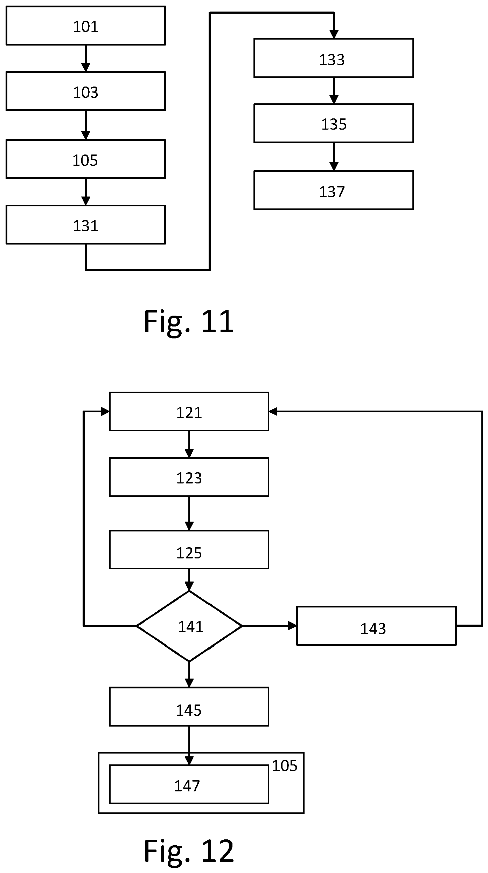

A third embodiment of the method of rendering a plurality of different lighting designs in a virtual and/or augmented reality environment and determining a user's preference with respect to the plurality of different lighting designs is shown in **Fig. 11**.

Compared to the first embodiment of **Fig. 9**, steps **111** and **113** have been omitted in the third embodiment of **Fig. 11** and steps **131**, **133**, **135** and **137** are performed after step **105** of **Fig. 9**. In an alternative embodiment, steps similar to steps **111** and **113** of **Fig. 9** are performed after step **137** of **Fig. 11**.

Step **131** comprises selecting a third lighting design and a fourth lighting design based on the user preference determined in step **105**. This third lighting design and this fourth lighting design have not been demonstrated in the virtual and/or augmented reality environment yet.

Step **133** comprises rendering a further plurality of different lighting designs in a further virtual and/or augmented reality environment. The further virtual and/or augmented reality environment comprises at least a first further spatial area demonstrating the third lighting design and a second further spatial area demonstrating the fourth lighting design,

Step **135** comprises determining a further path taken by the user in the further virtual and/or augment reality environment. Step **137** comprises determining whether the user prefers the third lighting design over the fourth lighting design or the fourth lighting design over the third lighting design based on the determined further path.

The further virtual and/or augmented reality environment rendered in step **131** may be clearly distinct from the virtual and/or augmented reality environment rendered in step **101** or the virtual and/or augmented reality environment rendered in step **101** may be replaced with the further virtual and/or augmented reality environment in step **131** while the user is moving, e.g. walking, in the virtual and/or augmented reality environment.

In the embodiment of **Fig. 11**. The third and fourth lighting designs are automatically generated, e.g. using machine learning and genetic algorithms. When using machine learning and genetic algorithms, an initial set lighting designs (which may be from an actual lighting designer or from other customers) may be used as a basis for the machine intelligence. The machine intelligence uses such designs to generate new designs that are then evaluated by the customer. Based on the customer feedback, the machine intelligence can provide new designs and, in this way, converge to the most preferred lighting system (which may use one or more lighting designs).

A fourth embodiment of the method of rendering a plurality of different lighting designs in a virtual and/or augmented reality environment and determining a user's preference with respect to the plurality of different lighting designs is shown in **Fig. 12**.

Compared to the second embodiment of **Fig. 10**, step **126** has been replaced by step **141**, an additional step **143** is present, step **127** has been replaced by step **145** and step **105** comprises a sub step **147**. Compared to step **126** of **Fig. 10**, it is further determined in step **141** of **Fig. 12** whether the user provided input for adapting the first lighting design and/or the second lighting design, e.g. by providing feedback such as like or dislike and/or too bright or too dark. If so, step **143** is performed next. Step **143** comprises adapting the first lighting design and/or the second lighting design based on this further input. Step **121** is repeated after step **143** and a new view is determined in step **121,** demonstrating the adapted lighting design.

Step **145** comprises determining the path taken by the user based on the input received in step **125**. In the embodiment of **Fig. 12**, this path indicates whether the user adapted the first lighting design and/or the second lighting design. Sub step **147** comprises determining whether the user prefers the first lighting design over the second lighting design or the second lighting design over the first lighting design based on whether the user adapted the first lighting design and/or the second lighting design.

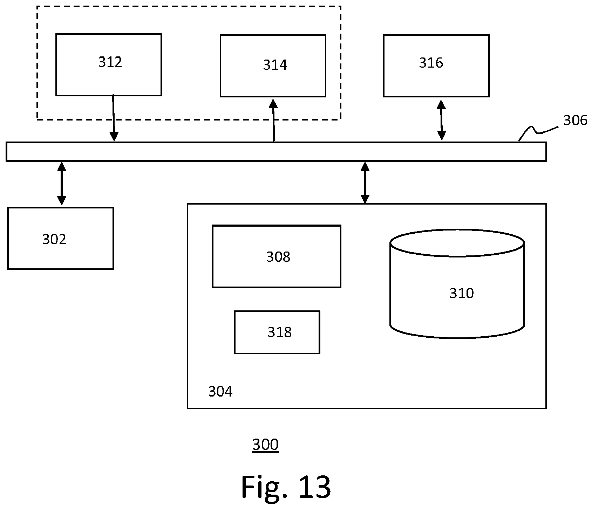

**Fig. 13** depicts a block diagram illustrating an exemplary data processing system that may perform the method as described with reference to **Figs. 9** to **12****.**

As shown in **Fig. 13****,** the data processing system **300** may include at least one processor **302** coupled to memory elements **304** through a system bus **306**. As such, the data processing system may store program code within memory elements **304**. Further, the processor **302** may execute the program code accessed from the memory elements **304** via a system bus **306**. In one aspect, the data processing system may be implemented as a computer that is suitable for storing and/or executing program code. It should be appreciated, however, that the data processing system **300** may be implemented in the form of any system including a processor and a memory that is capable of performing the functions described within this specification.

The memory elements **304** may include one or more physical memory devices such as, for example, local memory **308** and one or more bulk storage devices **310**. The local memory may refer to random access memory or other non-persistent memory device(s) generally used during actual execution of the program code. A bulk storage device may be implemented as a hard drive or other persistent data storage device. The processing system **300** may also include one or more cache memories (not shown) that provide temporary storage of at least some program code in order to reduce the quantity of times program code must be retrieved from the bulk storage device **310** during execution. The processing system **300** may also be able to use memory elements of another processing system, e.g. if the processing system **300** is part of a cloud-computing platform.

Input/output (I/O) devices depicted as an input device **312** and an output device **314** optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 13** with a dashed line surrounding the input device **312** and the output device **314**). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **316** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **300**, and a data transmitter for transmitting data from the data processing system **300** to said systems, devices and/or networks. Modems, cable modems, and Ethernet cards are examples of different types of network adapter that may be used with the data processing system **300**.

As pictured in **Fig. 13**, the memory elements **304** may store an application **318**. In various embodiments, the application **318** may be stored in the local memory **308,** the one or more bulk storage devices **310**, or separate from the local memory and the bulk storage devices. It should be appreciated that the data processing system **300** may further execute an operating system (not shown in **Fig. 13**) that can facilitate execution of the application **318.** The application **318**, being implemented in the form of executable program code, can be executed by the data processing system **300**, e.g., by the processor **302**. Responsive to executing the application, the data processing system **300** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **302** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of embodiments of the present invention has been presented for purposes of illustration, but is not intended to be exhaustive or limited to the implementations in the form disclosed. Many modifications and variations will be apparent to those of ordinary skill in the art when not departing from the scope of the present invention as defined by the claims.

The embodiments were chosen and described in order to best explain the principles and some practical applications of the present invention, and to enable others of ordinary skill in the art to understand the present invention for various embodiments with various modifications as are suited to the particular use contemplated.

## Claims

1. A system (1,21) for rendering a plurality of different lighting designs in a virtual and/or augmented reality environment (41), each of said plurality of different lighting designs comprising a lighting condition and/or an appearance of a lighting device (31-37), and determining a user's preference with respect to said plurality of different lighting designs, said system (1,21) comprising:
at least one input interface (8,9);
at least one output interface (4,9,28,29); and
at least one processor (5,25) configured to:
- use said at least one output interface (9,28,29) to render a plurality of different lighting designs in said virtual and/or augmented reality environment (41), said virtual and/or augmented reality environment (41) comprising at least a first spatial area (42) demonstrating a first one of said plurality of lighting designs and a second spatial area (43) demonstrating a second one of said plurality of lighting designs,
- use said at least one input interface (8,9) to determine a path (71) taken by said user in said virtual and/or augment reality environment (41), and
- determine whether said user prefers said first lighting design over said second lighting design or said second lighting design over said first lighting design based on said determined path (71).

2. A system (1,21) as claimed in claim 1, wherein said at least one processor (5,25) is configured to use said at least one output interface (9,28,29) to render video pixels corresponding to said plurality of different lighting designs superimposed on a user's view of the real world and determine said path (71) based on a plurality of physical locations of said user, said plurality of physical locations being obtained using said at least one input interface.

3. A system (1,21) as claimed in claim 1, wherein said at least one processor (5) is configured to:
- generate a virtual reality environment comprising said first spatial area (42) and said second spatial area (43),
- use said at least one output interface (9) to display a first image representing a first view of said virtual reality environment to said user, said first image comprising a first plurality of video pixels,
- use said at least one input interface (9) to receive input from said user,
- determine a second view of said virtual reality environment based on said user input, said second view being from a different position in said virtual reality environment than said first view,
- use said at least one output interface (9) to display a second image representing said second view of said virtual reality environment to said user, said second image comprising a second plurality of video pixels, and
- determine said path (71) taken by said user based on said user input.

4. A system (1,21) as claimed in claim 3, wherein said at least one processor (5) is configured to generate said virtual reality environment in dependence on a specified activity type and/or a specified activity level and/or a specified interior design and/or a specified daylight characteristic.

5. A system (1,21) as claimed in claim 4, wherein said at least one processor (5) is configured to determine said specified daylight characteristic based on a specified season of year and/or time of day and/or weather condition.

6. A system (1,21) as claimed in claim 1 or 2, wherein said at least one processor (5,25) is configured to include either said first lighting design or said second lighting design in a lighting plan in dependence on said determined user preference and use said at least one output interface (4) to output said lighting plan.

7. A system (1,21) as claimed in claim 1 or 2, wherein said at least one processor (5,25) is configured to:
- select a third lighting design and a fourth lighting design based on said determined user preference, said third lighting design and said fourth lighting design not having been demonstrated in said virtual and/or augmented reality environment (41),
- use said at least one output interface (9,28,29) to render a further plurality of different lighting designs in a further virtual and/or augmented reality environment, said further virtual and/or augmented reality environment comprising at least a first further spatial area demonstrating said third lighting design and a second further spatial area demonstrating said fourth lighting design,
- use said at least one input interface (8,9) to determine a further path taken by said user in said further virtual and/or augment reality environment, and
- determine whether said user prefers said third lighting design over said fourth lighting design or said fourth lighting design over said third lighting design based on said determined further path.

8. A system (1,21) as claimed in claim 1 or 2, wherein said at least one processor (5,25) is configured to determine that said user prefers said first lighting design over said second lighting design upon determining that said user entered said first spatial area (42) and did not enter said second spatial area (43) and determine that said user prefers said second lighting design over said first lighting design upon determining that said user entered said second spatial area (43) and did not enter said first spatial area (42).

9. A system (1,21) as claimed in claim 1 or 2, wherein said path indicates how long said user spent in said first spatial area (42) and said second spatial area (43) and said at least one processor (5,25) is configured to determine whether said user prefers said first lighting design over said second lighting design or said second lighting design over said first lighting design based on how long said user spent in said first spatial area (42) and said second spatial area (43).

10. A system (1,21) as claimed in claim 1 or 2, wherein said at least one processor (5,25) is configured to use said at least one input interface (9) to receive further input from said user and adapt said first lighting design and/or said second lighting design based on said further input.

11. A system (1,21) as claimed in claim 10, wherein said path indicates whether said user adapted said first lighting design and/or said second lighting design and said at least one processor (5,25) is configured to determine whether said user prefers said first lighting design over said second lighting design or said second lighting design over said first lighting design based on whether said user adapted said first lighting design and/or said second lighting design.

12. A system (1,21) as claimed in claim 1 or 2, wherein said first lighting design and said second lighting design comprise different light levels, different light colors, different lamp appearances, different luminaire appearances, different lamp types, different luminaire types, different luminaire locations and/or different luminaire orientations.

13. A method of rendering a plurality of different lighting designs in a virtual and/or augmented reality environment, each of said plurality of different lighting designs comprising a lighting condition and/or an appearance of a lighting device, and determining a user's preference with respect to said plurality of different lighting designs, said method comprising:
- rendering (101,123) a plurality of different lighting designs in said virtual and/or augmented reality environment, said virtual and/or augmented reality environment comprising at least a first spatial area demonstrating a first one of said plurality of lighting designs and a second spatial area demonstrating a second one of said plurality of lighting designs;
- determining (103,127,145) a path taken by said user in said virtual and/or augment reality environment; and
- determining (105) whether said user prefers said first lighting design over said second lighting design or said second lighting design over said first lighting design based on said determined path.

14. A computer program or suite of computer programs comprising at least one software code portion or a computer program product storing at least one software code portion, the software code portion, when run on a computer system, being configured for enabling the method of claim 13 to be performed.

## Patentansprüche

1. System (1,21) zum Rendern einer Vielzahl unterschiedlicher Beleuchtungsdesigns in einer Umgebung (41) der virtuellen und/oder erweiterten Realität, wobei jedes der Vielzahl von unterschiedlichen Beleuchtungsdesigns eine Beleuchtungsbedingung und/oder ein Erscheinungsbild einer Beleuchtungsvorrichtung (31-37) umfasst, und zum Bestimmen der Präferenz eines Benutzers in Bezug auf die Vielzahl unterschiedlicher Beleuchtungsdesigns, das System (1,21) umfassend:
mindestens eine Eingabeschnittstelle (8,9);
mindestens eine Ausgabeschnittstelle (4,9,28,29); und
mindestens einen Prozessor (5,25), der konfiguriert ist zum:
- Verwenden der mindestens einen Ausgabeschnittstelle (9,28,29), um eine Vielzahl unterschiedlicher Beleuchtungsdesigns in der Umgebung (41) der virtuellen und/oder erweiterten Realität zu rendern, wobei die Umgebung (41) der virtuellen und/oder erweiterten Realität mindestens einen ersten räumlichen Bereich (42), der ein erstes der Vielzahl von Beleuchtungsdesigns zeigt, und einen zweiten räumlichen Bereich (43), der ein zweites der Vielzahl von Beleuchtungsdesigns zeigt, umfasst,
- Verwenden der mindestens einen Eingabeschnittstelle (8,9), um einen Pfad (71) zu bestimmen, der von dem Benutzer in der Umgebung der virtuellen und/oder erweiterten Realität (41) genommen wurde, und
- Bestimmen, ob der Benutzer das erste Beleuchtungsdesign gegenüber dem zweiten Beleuchtungsdesign oder das zweite Beleuchtungsdesign gegenüber dem ersten Beleuchtungsdesign bevorzugt, basierend auf dem bestimmten Pfad (71).

2. System (1,21) nach Anspruch 1, wobei der mindestens eine Prozessor (5,25) konfiguriert ist, um die mindestens eine Ausgabeschnittstelle (9,28,29) zum Rendern von Videopixeln zu verwenden, die der Vielzahl unterschiedlicher Beleuchtungsdesigns entsprechen, die der Sicht eines Benutzers auf die reale Welt überlagert sind, und um den Pfad (71) basierend auf einer Vielzahl von physischen Orten des Benutzers zu bestimmen, wobei die Vielzahl von physischen Orten unter Verwendung der mindestens einen Eingabeschnittstelle erhalten wird.

3. System (1,21) nach Anspruch 1, wobei der mindestens eine Prozessor (5) konfiguriert ist zum:
- Erzeugen einer Umgebung der virtuellen Realität, umfassend den ersten räumlichen Bereich (42) und den zweiten räumlichen Bereich (43),
- Verwenden der mindestens einen Ausgabeschnittstelle (9) zum Anzeigen eines ersten Bildes, das eine erste Ansicht der Umgebung der virtuellen Realität für den Benutzer darstellt, wobei das erste Bild eine erste Vielzahl von Videopixeln umfasst,
- Verwenden der mindestens einen Eingabeschnittstelle (9), um Eingaben von dem Benutzer zu empfangen,
- Bestimmen einer zweiten Ansicht der Umgebung der virtuellen Realität basierend auf der Benutzereingabe, wobei die zweite Ansicht von einer anderen Position in der Umgebung der virtuellen Realität stammt als die erste Ansicht,
- Verwenden der mindestens einen Ausgabeschnittstelle (9) zum Anzeigen eines zweiten Bildes, das die zweite Ansicht der Umgebung der virtuellen Realität für den Benutzer darstellt, wobei das zweite Bild eine zweite Vielzahl von Videopixeln umfasst, und
- Bestimmen des von dem Benutzer genommenen Pfads (71) basierend auf der Benutzereingabe.

4. System (1,21) nach Anspruch 3, wobei der mindestens eine Prozessor (5) konfiguriert ist, um die Umgebung der virtuellen Realität in Abhängigkeit von einem spezifizierten Aktivitätstyp und/oder einem spezifizierten Aktivitätsniveau und/oder einem spezifizierten Innendesign und/oder einer spezifizierten Tageslichtcharakteristik zu erzeugen.

5. System (1,21) nach Anspruch 4, wobei der mindestens eine Prozessor (5) konfiguriert ist, um die spezifizierte Tageslichtcharakteristik basierend auf einer spezifizierten Jahreszeit und/oder Tageszeit und/oder Wetterbedingung zu bestimmen.

6. System (1,21) nach Anspruch 1 oder 2, wobei der mindestens eine Prozessor (5,25) konfiguriert ist, um entweder das erste Beleuchtungsdesign oder das zweite Beleuchtungsdesign in Abhängigkeit von der bestimmten Benutzerpräferenz in einen Beleuchtungsplan einzuschließen und die mindestens eine Ausgabeschnittstelle (4) zum Ausgeben des Beleuchtungsplans zu verwenden.

7. System (1,21) nach Anspruch 1 oder 2, wobei der mindestens eine Prozessor (5,25) konfiguriert ist zum:
- Auswählen eines dritten Beleuchtungsdesigns und eines vierten Beleuchtungsdesigns basierend auf der bestimmten Benutzerpräferenz, wobei das dritte Beleuchtungsdesign und das vierte Beleuchtungsdesign in der Umgebung der virtuellen und/oder erweiterten Realität (41) nicht nachgewiesen wurden,
- Verwenden der mindestens einen Ausgabeschnittstelle (9,28,29), um eine weitere Vielzahl unterschiedlicher Beleuchtungsdesigns in einer weiteren Umgebung der virtuellen und/oder erweiterten Realität zu rendern, wobei die weitere Umgebung der virtuellen und/oder erweiterten Realität mindestens einen ersten weiteren räumlichen Bereich, der das dritte Beleuchtungsdesign zeigt, und einen zweiten weiteren räumlichen Bereich, der das vierte Beleuchtungsdesign zeigt, umfasst,
- Verwenden der mindestens einen Eingabeschnittstelle (8,9) zum Bestimmen eines weiteren Pfades, der von dem Benutzer in der weiteren Umgebung der virtuellen und/oder erweiterten Realität genommen wird, und
- Bestimmen, ob der Benutzer das dritte Beleuchtungsdesign gegenüber dem vierten Beleuchtungsdesign oder das vierte Beleuchtungsdesign gegenüber dem dritten Beleuchtungsdesign basierend auf dem bestimmten weiteren Pfad bevorzugt.

8. System (1,21) nach Anspruch 1 oder 2, wobei der mindestens eine Prozessor (5,25) konfiguriert ist, um zu bestimmen, dass der Benutzer das erste Beleuchtungsdesign gegenüber dem zweiten Beleuchtungsdesign bevorzugt, wenn bestimmt wird, dass der Benutzer den ersten räumlichen Bereich (42) betreten und den zweiten räumlichen Bereich (43) nicht betreten hat, und zu bestimmen, dass der Benutzer das zweite Beleuchtungsdesign gegenüber dem ersten Beleuchtungsdesign bevorzugt, wenn bestimmt wird, dass der Benutzer den zweiten räumlichen Bereich (43) betreten und den ersten räumlichen Bereich (42) nicht betreten hat.

9. System (1,21) nach Anspruch 1 oder 2, wobei der Pfad angibt, wie lange der Benutzer in dem ersten räumlichen Bereich (42) und dem zweiten räumlichen Bereich (43) verbracht hat, und der mindestens eine Prozessor (5,25) konfiguriert ist, um zu bestimmen, ob der Benutzer das erste Beleuchtungsdesign gegenüber dem zweiten Beleuchtungsdesign oder das zweite Beleuchtungsdesign gegenüber dem ersten Beleuchtungsdesign bevorzugt, basierend darauf, wie lange der Benutzer in dem ersten räumlichen Bereich (42) und dem zweiten räumlichen Bereich (43) verbracht hat.

10. System (1,21) nach Anspruch 1 oder 2, wobei der mindestens eine Prozessor (5, 25) konfiguriert ist, um die mindestens eine Eingabeschnittstelle (9) zum Empfangen weiterer Eingaben des Benutzers zu verwenden und das erste Beleuchtungsdesign und/oder das zweite Beleuchtungsdesign basierend auf den weiteren Eingaben anzupassen.

11. System (1,21) nach Anspruch 10, wobei der Pfad angibt, ob der Benutzer das erste Beleuchtungsdesign und/oder das zweite Beleuchtungsdesign angepasst hat, und der mindestens eine Prozessor (5,25) konfiguriert ist, um zu bestimmen, ob der Benutzer das erste Beleuchtungsdesign gegenüber dem zweiten Beleuchtungsdesign oder das zweite Beleuchtungsdesign gegenüber dem ersten Beleuchtungsdesign bevorzugt, basierend darauf, ob der Benutzer das erste Beleuchtungsdesign und/oder das zweite Beleuchtungsdesign angepasst hat.

12. System (1,21) nach Anspruch 1 oder 2, wobei das erste Beleuchtungsdesign und das zweite Beleuchtungsdesign unterschiedliche Lichtpegel, unterschiedliche Lichtfarben, unterschiedliche Lampenerscheinungen, unterschiedliche Leuchtenerscheinungen, unterschiedliche Lampentypen, unterschiedliche Leuchtentypen, unterschiedliche Leuchtenstandorte und/oder unterschiedliche Leuchtenausrichtungen umfassen.

13. Verfahren zum Rendern einer Vielzahl unterschiedlicher Beleuchtungsdesigns in einer Umgebung der virtuellen und/oder erweiterten Realität, wobei jedes der Vielzahl unterschiedlicher Beleuchtungsdesigns eine Beleuchtungsbedingung und/oder ein Erscheinungsbild einer Beleuchtungsvorrichtung umfasst, und zum Bestimmen der Präferenz eines Benutzers in Bezug auf die Vielzahl unterschiedlicher Beleuchtungsdesigns, das Verfahren umfassend:
- Rendern (101,123) einer Vielzahl unterschiedlicher Beleuchtungsdesigns in der Umgebung der virtuellen und/oder erweiterten Realität, wobei die Umgebung der virtuellen und/oder erweiterten Realität mindestens einen ersten räumlichen Bereich, der ein erstes der Vielzahl von Beleuchtungsdesigns zeigt, und einen zweiten räumlichen Bereich, der ein zweites der Vielzahl von Beleuchtungsdesigns zeigt, umfasst;
- Bestimmen (103,127,145) eines von dem Benutzer in der Umgebung der virtuellen und/oder erweiterten Realität genommenen Pfades; und
- Bestimmen (105), ob der Benutzer das erste Beleuchtungsdesign gegenüber dem zweiten Beleuchtungsdesign oder das zweite Beleuchtungsdesign gegenüber dem ersten Beleuchtungsdesign bevorzugt, basierend auf dem bestimmten Pfad.

14. Computerprogramm oder Folge von Computerprogrammen, umfassend mindestens einen Softwarecodeabschnitt oder ein Computerprogrammprodukt, das mindestens einen Softwarecodeabschnitt speichert, wobei der Softwarecodeabschnitt bei Ausführung auf einem Computersystem konfiguriert ist, damit das Verfahren nach Anspruch 13 durchgeführt werden kann.

## Revendications

1. Système (1, 21) pour restituer une pluralité de conceptions d'éclairage différentes dans un environnement de réalité virtuelle et/ou augmentée (41), chacune parmi ladite pluralité de conceptions d'éclairage différentes comprenant une condition d'éclairage et/ou une apparence d'un dispositif d'éclairage (31-37) et déterminer une préférence d'un utilisateur par rapport à ladite pluralité de conceptions d'éclairage différentes, ledit système (1, 21) comprenant :
au moins une interface d'entrée (8, 9) ;
au moins une interface de sortie (4, 9, 28, 29) ; et
au moins un processeur (5, 25) configuré pour :
- utiliser ladite au moins une interface de sortie (9, 28, 29) pour restituer une pluralité de conceptions d'éclairage différentes dans ledit environnement de réalité virtuelle et/ou augmentée (41), ledit environnement de réalité virtuelle et/ou augmentée (41) comprenant au moins une première zone spatiale (42) montrant une première parmi ladite pluralité de conceptions d'éclairage et une deuxième zone spatiale (43) montrant une deuxième parmi ladite pluralité de conceptions d'éclairage,
- utiliser ladite au moins une interface d'entrée (8, 9) pour déterminer un trajet (71) pris par ledit utilisateur dans ledit environnement de réalité virtuelle et/ou augmentée (41) et
- déterminer si ledit utilisateur préfère ladite première conception d'éclairage par rapport à ladite deuxième conception d'éclairage ou ladite deuxième conception d'éclairage par rapport à ladite première conception d'éclairage sur la base dudit trajet déterminé (71).

2. Système (1, 21) tel que revendiqué dans la revendication 1, dans lequel ledit au moins un processeur (5, 25) est configuré pour utiliser ladite au moins une interface de sortie (9, 28, 29) pour restituer des pixels vidéo correspondant à ladite pluralité de conceptions d'éclairage différentes superposées sur une vue de l'utilisateur du monde réel et déterminer ledit trajet (71) sur la base d'une pluralité de localisations physiques dudit utilisateur, ladite pluralité de localisations physiques étant obtenue en utilisant ladite au moins une interface d'entrée.

3. Système (1, 21) tel que revendiqué dans la revendication 1, dans lequel ledit au moins un processeur (5) est configuré pour :
- générer un environnement de réalité virtuelle comprenant ladite première zone spatiale (42) et ladite deuxième zone spatiale (43),
- utiliser ladite au moins une interface de sortie (9) pour afficher une première image représentant une première vue dudit environnement de réalité virtuelle audit utilisateur, ladite première image comprenant une première pluralité de pixels vidéo,
- utiliser ladite au moins une interface d'entrée (9) pour recevoir une entrée provenant dudit utilisateur,
- déterminer une deuxième vue dudit environnement de réalité virtuelle sur la base de ladite entrée utilisateur, ladite deuxième vue provenant d'une position dans ledit environnement de réalité virtuelle différente de ladite première vue,
- utiliser ladite au moins une interface de sortie (9) pour afficher une deuxième image représentant ladite deuxième vue dudit environnement de réalité virtuelle audit utilisateur, ladite deuxième image comprenant une deuxième pluralité de pixels vidéo et
- déterminer ledit trajet (71) pris par ledit utilisateur sur la base de ladite entrée utilisateur.

4. Système (1, 21) tel que revendiqué dans la revendication 3, dans lequel ledit au moins un processeur (5) est configuré pour générer ledit environnement de réalité virtuelle en fonction d'un type spécifié d'activité et/ou d'un niveau spécifié d'activité et/ou d'un aménagement intérieur spécifié et/ou d'une caractéristique spécifiée de lumière du jour.

5. Système (1, 21) tel que revendiqué dans la revendication 4, dans lequel ledit au moins un processeur (5) est configuré pour déterminer ladite caractéristique spécifiée de lumière du jour sur la base d'une saison de l'année et/ou heure de la journée et/ou conditions météorologiques, spécifiée(s).

6. Système (1, 21) tel que revendiqué dans la revendication 1 ou 2, dans lequel ledit au moins un processeur (5, 25) est configuré pour inclure soit ladite première conception d'éclairage soit ladite deuxième conception d'éclairage dans un plan d'éclairage en fonction de ladite préférence déterminée d'utilisateur et utiliser ladite au moins une interface de sortie (4) pour délivrer en sortie ledit plan d'éclairage.

7. Système (1, 21) tel que revendiqué dans la revendication 1 ou 2, dans lequel ledit au moins un processeur (5, 25) est configuré pour :
- sélectionner une troisième conception d'éclairage et une quatrième conception d'éclairage sur la base de ladite préférence déterminée d'utilisateur, ladite troisième conception d'éclairage et ladite quatrième conception d'éclairage n'ayant pas été montrés dans ledit environnement de réalité virtuelle et/ou augmentée (41),
- utiliser ladite au moins une interface de sortie (9, 28, 29) pour restituer une autre pluralité de conceptions d'éclairage différentes dans un autre environnement de réalité virtuelle et/ou augmentée, ledit autre environnement de réalité virtuelle et/ou augmentée comprenant au moins une première autre zone spatiale montrant ladite troisième conception d'éclairage et une deuxième autre zone spatiale montrant ladite quatrième conception d'éclairage,
- utiliser ladite au moins une interface d'entrée (8, 9) pour déterminer un autre trajet pris par ledit utilisateur dans ledit autre environnement de réalité virtuelle et/ou augmentée et
- déterminer si ledit utilisateur préfère ladite troisième conception d'éclairage par rapport à ladite quatrième conception d'éclairage ou ladite quatrième conception d'éclairage par rapport à ladite troisième conception d'éclairage sur la base dudit autre trajet déterminé.

8. Système (1, 21) tel que revendiqué dans la revendication 1 ou 2, dans lequel ledit au moins un processeur (5, 25) est configuré pour déterminer que ledit utilisateur préfère ladite première conception d'éclairage par rapport à ladite deuxième conception d'éclairage lorsqu'on détermine que ledit utilisateur est entré dans ladite première zone spatiale (42) et n'est pas entré dans ladite deuxième zone spatiale (43) et déterminer que ledit utilisateur préfère ladite deuxième conception d'éclairage par rapport à ladite première conception d'éclairage lorsqu'on détermine que ledit utilisateur est entré dans ladite deuxième zone spatiale (43) et n'est pas entré dans ladite première zone spatiale (42).

9. Système (1, 21) tel que revendiqué dans la revendication 1 ou 2, dans lequel ledit trajet indique combien de temps ledit utilisateur a passé dans ladite première zone spatiale (42) et ladite deuxième zone spatiale (43) et ledit au moins un processeur (5, 25) est configuré pour déterminer si ledit utilisateur préfère ladite première conception d'éclairage par rapport à ladite deuxième conception d'éclairage ou ladite deuxième conception d'éclairage par rapport à ladite première conception d'éclairage sur la base de la durée que ledit utilisateur à passé dans ladite première zone spatiale (42) et ladite deuxième zone spatiale (43).

10. Système (1, 21) tel que revendiqué dans la revendication 1 ou 2, dans lequel ledit au moins un processeur (5, 25) est configuré pour utiliser ladite au moins une interface d'entrée (9) pour recevoir une autre entrée provenant dudit utilisateur et adapter ladite première conception d'éclairage et/ou ladite deuxième conception d'éclairage sur la base de ladite autre entrée.

11. Système (1, 21) tel que revendiqué dans la revendication 10, dans lequel ledit trajet indique si ledit utilisateur a adapté ladite première conception d'éclairage et/ou ladite deuxième conception d'éclairage et ledit au moins un processeur (5, 25) est configuré pour déterminer si ledit utilisateur préfère ladite première conception d'éclairage par rapport à ladite deuxième conception d'éclairage ou ladite deuxième conception d'éclairage par rapport à ladite première conception d'éclairage sur la base du fait que ledit utilisateur a adapté ladite première conception d'éclairage et/ou ladite deuxième conception d'éclairage.

12. Système (1, 21) tel que revendiqué dans la revendication 1 ou 2, dans lequel ladite première conception d'éclairage et ladite deuxième conception d'éclairage comprennent des niveaux de lumière différents, des couleurs de lumière différentes, des apparences de lampe différentes, des apparences de luminaire différentes, des types de lampe différents, des types de luminaire différents, des emplacements de luminaire différents et/ou des orientations de luminaire différentes.

13. Procédé pour restituer une pluralité de conceptions d'éclairage différentes dans un environnement de réalité virtuelle et/ou augmentée, chacune parmi ladite pluralité de conceptions d'éclairage différentes comprenant une condition d'éclairage et/ou une apparence d'un dispositif d'éclairage et déterminer une préférence d'un utilisateur par rapport à ladite pluralité de conceptions d'éclairage différentes, ledit procédé comprenant :
- la restitution (101, 123) d'une pluralité de conceptions d'éclairage différentes dans ledit environnement de réalité virtuelle et/ou augmentée, ledit environnement de réalité virtuelle et/ou augmentée comprenant au moins une première zone spatiale montrant une première parmi ladite pluralité de conceptions d'éclairage et une deuxième zone spatiale montrant une deuxième parmi ladite pluralité de conceptions d'éclairage ;
- la détermination (103, 127, 145) d'un trajet pris par ledit utilisateur dans ledit environnement de réalité virtuelle et/ou augmentée ; et
- le fait de déterminer (105) si ledit utilisateur préfère ladite première conception d'éclairage par rapport à ladite deuxième conception d'éclairage ou ladite deuxième conception d'éclairage par rapport à ladite première conception d'éclairage sur la base dudit trajet déterminé.

14. Programme informatique ou suite de programmes informatiques comprenant au moins une partie de code logiciel ou produit programme informatique stockant au moins une partie de code logiciel, la partie de code logiciel, lorsqu'elle est exécutée sur un système informatique, étant configurée pour permettre au procédé selon la revendication 13 d'être mis en oeuvre.
